# EUROPÄISCHE PATENTSCHRIFT

(11) **EP 2 087 481 B1**
(45) Veröffentlichungstag und Bekanntmachung des Hinweises auf die Patenterteilung: **06.11.2019**
(21) Anmeldenummer: 07820600.0
(22) Anmeldetag: 26.09.2007
(51) Int. Cl.: G09F 3/02, G09F 3/10

(54) **ETIKETT MIT ABWINKELBAREM TEIL**
LABEL WITH ANGLEABLE PART
ÉTIQUETTE POURVUE D'UNE PARTIE POUVANT ÊTRE RELEVÉE

(30) Priorität: 18.10.2006 DE 102006049042
(43) Veröffentlichungstag der Anmeldung: 12.08.2009
(73) Patentinhaber: Schreiner Group GmbH & Co. KG, 85764 Oberschleissheim (DE)
(72) Erfinder: MOOSHEIMER, Ulrich, 85411 Hohenkammer (DE); MAIR, Josef, 85250 Altomünster (DE)
(74) Vertreter: Epping - Hermann - Fischer
(86) Internationale Anmeldenummer: PCT/EP2007/060205
(87) Internationale Veröffentlichungsnummer: WO 2008/046722

(56) Entgegenhaltungen:
- GB-A- 2 366 279
- JP-A- 2003 043 919
- NL-C2- 1 000 785
- US-A1- 2002 121 037
- US-A1- 2007 146 140

## Beschreibung

Die Erfindung betrifft ein Etikett mit einem Aufbau, der es ermöglicht, ein Etikett auf gekrümmten Oberflächen zu verkleben und einen Teil des Etiketts anschließend in einem definierten Winkel von der gekrümmten Oberfläche aufzustellen.

Ein solcher in definiertem Winkel von einer Oberfläche abstehender Etikettenteil kann für verschiedene Aufgabenstellungen von Nutzen sein. So kann dieser Etikettenteil bei einem auf einem Rohr verklebten Etikett etwa Informationen über das im Rohr geförderte Medium oder den technischen Zustand des Rohres aufnehmen. Durch das Abstehen des Informationsteiles vom Rohr wird in diesem Fall die Lesbarkeit erleichtert. Ein weiterer Anwendungsbereich eines von einer gekrümmten Oberfläche definiert abstehenden Etikettenteils sind RFID (Radio Frequency Identification) Etiketten, deren Lesbarkeit auf metallischen Oberflächen eingeschränkt ist. Mittels eines definiert aufstellbaren Etikettenbereiches können die RFID-Komponenten derartiger Etiketten von der Oberfläche dauerhaft beabstandet werden, wodurch die elektronische Auslesbarkeit - wie etwa in der deutschen Offenlegungsschrift DE 10017142 A1 beschrieben - gewährleistet bleibt. Weitere Anwendungen des Prinzips sind in Spritzen- etiketten integrierte Nadelschutzvorrichtungen, die während der Injektion durch den Arzt definiert vom Spritzenkörper weggeklappt werden können müssen.

Ein Nachteil der aus der DE 10017142 bekannten Lösung ist, dass zusätzliche Faltungen erforderlich sind, um das Etikett in einer definierten Position zu fixieren.

NL 1 000 785 C2 offenbart ein auf einer gekrümmten Oberfläche befestigbares Etikett mit einem abwinkelbaren Abschnitt, wobei im abwinkelbaren Abschnitt ein Verstärkungsbereich angeordnet ist, dessen im abgewinkelten Zustand an der gekrümmten Oberfläche anliegende Kante so geformt ist, dass der abgewinkelte Abschnitt in einem definierten Winkel fixierbar ist.

GB 2 366 279 A offenbart ein auf einer gekrümmten Oberfläche befestigbares Etikett mit einem Abschnitt, der abwinkelbar ist, jedoch nicht in einem definierten Winkel zur gekrümmten Oberfläche fixierbar ist.

US 2007/0146140 A1 offenbart ein Etikett gemäß dem Oberbegriff des Anspruchs 1.

Es ist die Aufgabe der vorliegenden Erfindung, ein Etikett bereitzustellen, das in so in einem definierten Winkel relativ zur gekrümmten Oberfläche fixierbar ist, dass Verwerfungen des Etiketts seiner Folien, insbesondere beim Umklappen des abwinkelbaren Abschnitts, abgebaut werden.

Diese Aufgabe wird durch das Etikett gemäß Anspruch 1 und durch den Körper gemäß Anspruch 12 gelöst.

Ein Teil eines Etiketts, der in definiertem Winkel von der gekrümmten Oberfläche abstehen soll, weist erfindungsgemäß einen Verstärkungsbereich auf, der am Übergang zwischen einem der Befestigung dienenden Teil des Etiketts und dem aufzustellenden Teil eine Randkrümmung aufweist, welche so ausgeführt ist, daß sie bei bzw. nach Anbringung des Etiketts an einem bestimmungsgemäßen Gegenstand eine Fixierung des aufzustellenden Teils in dem definierten Winkel bewirkt.

Der Verstärkungsbereich kann durch partielle Härtung oder Verfestigung einer Folie oder durch Verstärkung des Etiketts mit einem geeignet geformten Folienteil gebildet werden. Vorzugsweise besitzt der Verstärkungsbereich eine Biegesteifigkeit nach DIN 53121 über 1 mNm, oder über 2 mNm, besonders bevorzugt über 5 mNm.

Die Erfindung wird im Folgenden anhand der rein schematischen und nicht maßstabsgetreuen Zeichnungen beschrieben.
Figur 1 zeigt den prinzipiellen Aufbau eines Etiketts gemäß einer Ausführungsform der Erfindung
Figur 2 zeigt die Gestaltung der Randkrümmung des Verstärkungsteils des Etiketts aus Fig. 1.
Figur 3 zeigt eine geeignete Dimensionierung der Randkrümmung
**Figur 4** zeigt ein auf einem zylindrischen Rohr verklebtes Etikett.

Unter dem Begriff "gekrümmte Oberflächen" sind im Folgenden alle Oberflächen, die im Bereich der Aufstellachse des Etiketts eine Krümmung aufweisen, jedoch insbesondere Oberflächen von Extrusionskörpern mit rundem oder elipsenförmigem Querschitt und hier im Besonderen Zylinder (Röhren) zu verstehen. Unter dem Begriff Etikett sind alle folienförmigen mit dem zu etikettierenden Gegenstand verbindbaren Informationsträger zu verstehen. Als Verbindungstechniken kommen neben der Haftklebung (selbstklebende Etiketten) auch alle anderen geläufigen Verbindungstechniken wie permanente Verklebung, Verschweißen, Klammern, Nieten u.ä. infrage.

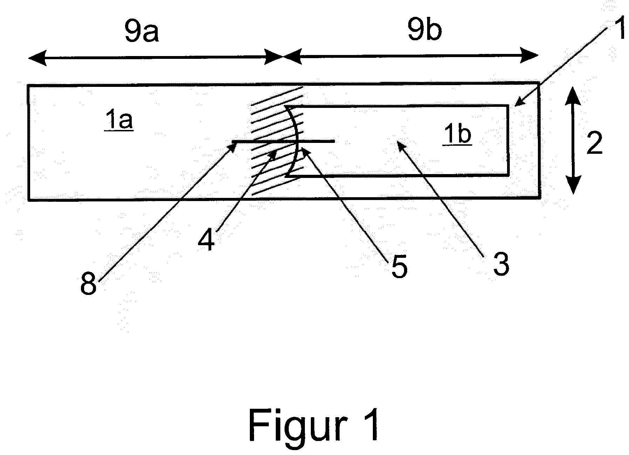

**Figur 1** zeigt den prinzipiellen Aufbau eines erfindungsgemäßen Etiketts 1. Das später auf in Richtung 2 (quer zur Ausdehnung 9a, 9b) gekrümmte Oberflächen zu befestigende Etikett 1 besteht aus zwei Teilbereichen 1a und 1b, die durch einen Knickbereich 4 und das linke Ende eines Verstärkungsbereiches 3 definiert sind. Die Knickbereich 4 kann durch Schwächung des Etikettenmaterials 1 (Rillung, Perforation o. ä.) entstehen oder ohne zusätzliche Schwächung des Etikettenmaterials lediglich durch das Ende des Verstärkungsbereiches 3 vorgegeben sein. Der Verstärkungsbereich 3 weist an dem dem Knickbereich benachbarten Ende eine definierte Randkrümmung 5 auf, die so gewählt ist, dass sie im aufgestellten Zustand des Teilbereiches 1b eng an der Krümmung der darunter liegenden gekrümmten Oberfläche anliegt. Um dies zu gewährleisten, muss der Verstärkungsbereich 3 hinreichend starr sein, während das Material des Etiketts 1 genügend flexibel sein muss, um die beim Aufstellen des Etikettenteils 1b entstehenden Dehnungen/Kompressionen des Folienmaterials 1 aufzunehmen. Als Materialien für das Etikett 1 kommen insbesondere PP, PE oder PET in Fraage, während das Verstärkungsteil vorzugsweise aus PET, PP, PE oder aber auch Pappe oder dgl. gefertigt ist. Der Verstärkungsbereich 3 kann neben der Verbindung eines Verstärkungsteils 3 aus einer zweiten steifen Folienlage mit dem Etikett 1 auch durch die Härtung des vorhandenen Etiketts 1 im Bereich 3 erfolgen.

Bei der separaten Folienlage kommen zur Verbindung mit dem Etikett 1 alle dem Fachmann bekannten Verbindungsvarianten, insbesondere jedoch eine selbstklebende Verbindung, infrage. Für die Härtung des Bereiches 3 sind Folienmaterialien geeignet, deren Steifigkeit sich durch lokale physikalische oder chemische Behandlung erhöhen lässt.

Die Gestaltung der definierten Krümmung 5 sowie der Materialkombination für das Etikett 1 und den Verstärkungsbereich 3 ermöglichen den definierten Winkel, sowie die Kräfte beim Aufklappen und beim Schließen des aufstellbaren Bereiches einzustellen.

Die Kräfte beim Aufklappen und beim Schließen des aufstellbaren Bereiches können zusätzlich durch Schwächungen oder Durchbrüche 8 beeinflußt werden. Als Beispiel zeigt Figur 1 eine Stanzline quer zur Krümmung 5. Die Stanzung führt dazu, daß die Verwerfungen der Folien im Knickbereich 4 beim Klappen besser abgebaut werden können. Dadurch verringert sich die Kraft, die bis zum Erreichen der Endposition des Aufstellbereiches aufgewendet werden muß. Alternativ sind auch mehrer parallele Schwächungen / Durchbrüche oder auch Schwächungen / Durchbrüche parallel zur Krümmung 5 geeignet.

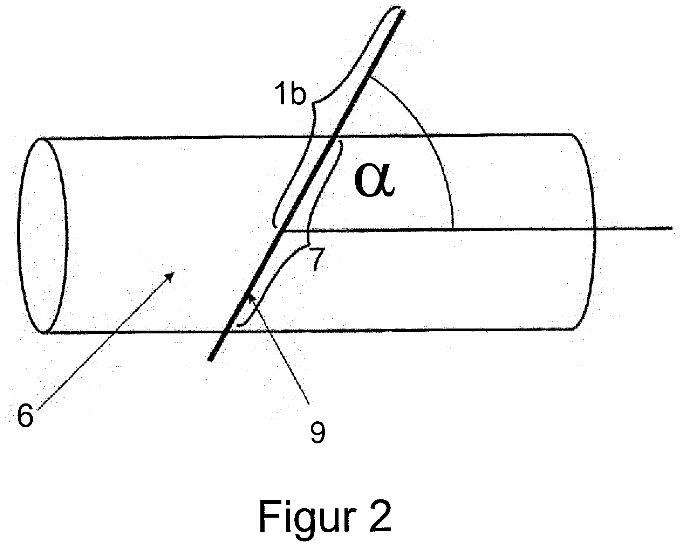

**Figur 2** illustriert, wie die Randkrümmung 5 (Figur 1) des Verstärkungsteils 3 gestaltet ist, um ein Aufstellen des Etikettenteils 1b in definiertem Winkel α von der Oberfläche einer - hier der Einfachheit der Darstellung halber zylindrisch - gekrümmten Oberfläche 6 zu erreichen. Die Randkrümmung 5 (Figur 1) ergibt sich, in dem bei vorgegebenen Winkel α die Schnittfläche 7 einer Ebene 9 mit dem zylindrischen Körper 6 ermittelt wird.

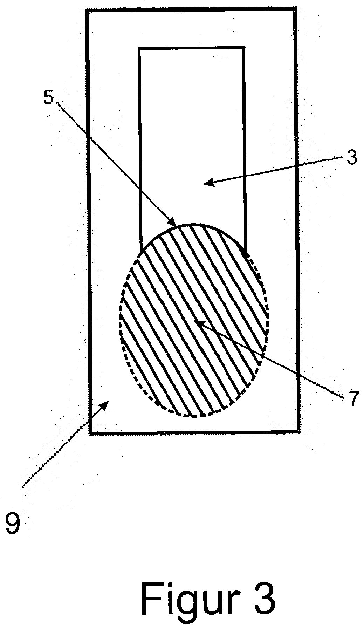

**Figur 3** zeigt diese Schnittfläche 7 als schraffierten Bereich in der Ebene 9. Die Randkrümmung 5 des Verstärkungsteiles 3 ergibt sich gemäß Figur 3 als Segment der Begrenzungslinie von Schnittfläche 7. Durch die Steifigkeit des Verstärkungsteiles 3 insbesondere im Bereich der Krümmung 5 wird erreicht, dass der aufgestellte Bereich 1b des Etiketts im vorgegebenen Winkel vom zylindrischen Körper 6 absteht. Wenn der Krümmungsradius der Randkrümmung 5 gleich dem Radius des zylindrischen Körpers 6 gewählt wird, ergibt sich ein Abstellwinkel α von 90 Grad.

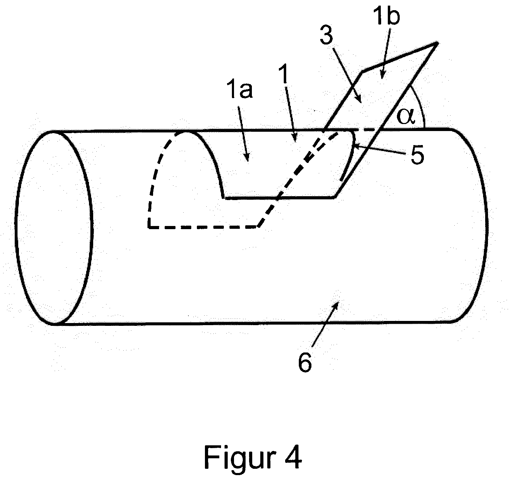

**Figur 4** zeigt ein solches auf einem zylindrischen Rohr verklebtes Etikett. Es ist zu erkennen, wie die definierte Krümmung 5 (Figur 3) den aufstellbaren Bereich 1b des Etiketts im definierten Winkel α hält. Darüber hinaus sorgt ein steifes, plan liegendes Verstärkungsteil 3 dafür, dass der Aufstellbereich 1b des Etiketts eine ebene (ggf. gut lesbare) Fläche bildet. Der Verstärkungsteil 3 ist in Figur 4 lediglich angedeutet. Der Bereich 1a des Etiketts kann quer zur Rohrachse auch wesentlich breiter als der Bereich 1b ausgebildet werden, so dass in diesem Bereich etwa eine Rundum- oder Überrundumetikettierung des zylindrischen Körpers (ein Ende des Etiketts wird einmal um den Zylinder gewickelt wieder auf seinem Anfangsbereich verklebt) erfolgen kann.

## Patentansprüche

1. Etikett (1), das auf einer gekrümmten Oberfläche befestigbar ist, wobei das Etikett (1) zumindest Folgendes aufweist:
- einen ersten Etikettenabschnitt (1a), der auf einer gekrümmten Oberfläche befestigbar ist,
- einen relativ zum ersten Etikettenabschnitt (1a) abwinkelbaren zweiten Etikettenabschnitt (1b) mit einem Verstärkungsbereich (3), der zwischen dem ersten Etikettenabschnitt (1a) und dem zweiten Etikettenabschnitt (1b) eine Kante (5) aufweist, und
- eine Stanzlinie (8),
wobei die Kante (5) gekrümmt ist und als Segment einer Begrenzungslinie, welche sich aus einem Schnitt der gekrümmten Oberfläche mit einer ebenen Schnittfläche (7) unter einem vorgegebenen, definierten Winkel (α) ergibt, ausgebildet ist, wodurch im abgewinkelten Zustand des zweiten Etikettenabschnitts (1b) die Kante (5) an der gekrümmten Oberfläche anliegt und der abwinkelbare Abschnitt (1b) in dem vorgegebenen, definierten Winkel (α) relativ zum ersten Etikettenabschnitt (1a) fixiert wird,
**dadurch gekennzeichnet,**
**dass** die Stanzlinie (8) quer zur gekrümmten Kante (5) verläuft.

2. Etikett (1) nach Anspruch 1,
**dadurch gekennzeichnet,**
**dass** das Etikett (1) auf einer zylindrischen Oberfläche befestigbar ist.

3. Etikett (1) nach Anspruch 1 oder 2,
**dadurch gekennzeichnet,**
**dass** die gekrümmte Kante (5) als Segment einer Ellipse ausgebildet ist.

4. Etikett (1) nach einem der Ansprüche 1 bis 3,
**dadurch gekennzeichnet,**
**dass** der Verstärkungsbereich (3) als steifes, plan liegendes Verstärkungsteil ausgebildet ist.

5. Etikett (1) nach einem der Ansprüche 1 bis 4,
**dadurch gekennzeichnet,**
**dass** der Verstärkungsbereich (3) des abwinkelbaren zweiten Etikettenabschnitts (1b) plan liegend ist, wodurch der zweite Etikettenabschnitt (1b) eine ebene Fläche bildet.

6. Etikett (1) nach einem der Ansprüche 1 bis 5,
**dadurch gekennzeichnet,**
**dass** der Verstärkungsbereich (3) ein auf dem zweiten Etikettenabschnitt (1b) befestigtes Folienteil ist.

7. Etikett (1) nach einem der Ansprüche 1 bis 6,
**dadurch gekennzeichnet,**
**dass** die Steifigkeit des Verstärkungsbereichs (3) lokal erhöht ist.

8. Etikett (1) nach einem der Ansprüche 1 bis 7,
**dadurch gekennzeichnet,**
**dass** die Steifigkeit des Verstärkungsbereichs (3) durch chemische Substanzen lokal erhöht ist.

9. Etikett (1) nach Anspruch 8,
**dadurch gekennzeichnet,**
**dass** die chemischen Substanzen zur Verstärkung der Steifigkeit verdruckt sind.

10. Etikett (1) nach einem der Ansprüche 1 bis 9,
**dadurch gekennzeichnet,**
**dass** der Verstärkungsbereich (3) durch ein auf dem zweiten Etikettenabschnitt (1b) selbstklebend befestigtes Folienteil gebildet ist.

11. Körper (6) mit
- einer gekrümmten Oberfläche und
- einem Etikett (1) nach einem der Ansprüche 1 bis 10,
wobei der erste Etikettenabschnitt (1a) des Etiketts (1) auf der gekrümmten Oberfläche des Körpers (6) befestigt ist und der zweite Etikettenabschnitt (1b) relativ zum ersten Etikettenabschnitt (1a) unter den vorgesehen, definierten Winkel (α) abgewinkelt ist und unter diesem Winkel (α) fixiert ist, wobei die gekrümmte Kante (5) an der gekrümmten Oberfläche des Körpers (6) anliegt.

12. Körper (6) nach Anspruch 11,
**dadurch gekennzeichnet,**
**dass** der Körper (6) eine zylindrische Form aufweist oder dass er röhrenförmig ist.

13. Körper (6) nach Anspruch 11 oder 12,
**dadurch gekennzeichnet,**
**dass** der Körper (6) ein Spritzenkörper ist.

14. Körper (6) nach einem der Ansprüche 11 bis 13,
**dadurch gekennzeichnet, dass** das Etikett (1) mit einer Schutzvorrichtung für Nadeln verbunden ist.

## Claims

1. A label (1) which can be attached to a curved surface, the label (1) comprising at least the following:
- a first label portion (1a) which can be attached to a curved surface,
- a second label portion (1b) which can be bent relative to the first label portion (1a) and comprises a reinforcement area (3) that has an edge (5) between the first label portion (1a) and the second label portion (1b), and
- a stamped line (8),
wherein the edge (5) is curved and is formed as a segment of a boundary line which results from an intersection of the curved surface with a planar intersection (7) plane at a predetermined, defined angle (α), whereby in the bent state of the second label portion (1b) the edge (5) abuts against the curved surface and the portion (1b) that can be bent is fixed at the predetermined, defined angle (α) relative the first label portion (1a),
**characterized in that**
the stamped line (8) extends transverse to the curved edge (5).

2. The label (1) according to claim 1,
**characterized in that**
the label (1) can be attached to a cylindrical surface.

3. The label (1) according to claim 1 or 2,
**characterized in that**
the curved edge (5) is formed as a segment of an ellipse.

4. The label (1) according to any of claims 1 to 3,
**characterized in that**
the reinforcement area (3) is formed as a stiff reinforcement part with planar extension.

5. The label (1) according to any of claims 1 to 4,
**characterized in that**
the reinforcement area (3) of the second label portion (1b) that can be bent has a planar extension, whereby the second label portion (1b) forms a flat surface.

6. The label (1) according to any of claims 1 to 5,
**characterized in that**
the reinforcement area (3) is a foil part attached to the second label portion (1b).

7. The label (1) according to any of claims 1 to 6,
**characterized in that**
the stiffness of the reinforcement area (3) is locally increased.

8. The label (1) according to any of claims 1 to 7,
**characterized in that**
the stiffness of the reinforcement area (3) is locally increased by chemical substances.

9. The label (1) according to claim 8,
**characterized in that**
the chemical substances for increasing the stiffness are applied by printing.

10. The label (1) according to any of claims 1 to 9,
**characterized in that**
the reinforcement area (3) is formed by a foil part which is attached to the second label portion (1b) in a self-adhesive manner.

11. A body (6) comprising
- a curved surface and
- a label (1) according to any of claims 1 to 10,
wherein the first label portion (1a) of the label (1) is attached to the curved surface of the body (6) and the second label portion (1b) is bent relative to the first label portion (1a) at the predetermined, defined angle (α) and is fixed at said angle (α), the curved edge (5) abutting against the curved surface of the body (6).

12. The body (6) according to claim 11,
**characterized in that**
the body (6) has a cylindrical shape or is tubular.

13. The body (6) according to claim 11 or 12,
**characterized in that**
the body (6) is a syringe body.

14. The body (6) according to any of claims 11 to 13,
**characterized in that**
the label (1) is connected to a protective device for needles.

## Revendications

1. Étiquette (1) qui est apte à être fixée sur une surface courbe, sachant que l'étiquette (1) présente au moins ce qui suit :
- une première section d'étiquette (1a) qui est apte à être fixée sur une surface courbe,
- une deuxième section d'étiquette (1b) relevable par rapport à la première section d'étiquette (1a) avec une zone de renfort (3) qui présente une arête (5) entre la première section d'étiquette (1a) et la deuxième section d'étiquette (1b), et
- une ligne de découpe (8),
sachant que l'arête (5) est courbe et est constituée comme segment d'une ligne de délimitation, laquelle résulte de l'intersection de la surface courbe avec une face de coupe plane (7) selon un angle (α) défini spécifié, ce par quoi l'arête (5) repose contre la surface courbe dans l'état relevé de la deuxième section d'étiquette (1b) et la section (1b) relevable est arrêtée à l'angle (α) défini spécifié par rapport à la première section d'étiquette (1a),
**caractérisée en ce que**
la ligne de découpe (8) présente un tracé transversal à l'arête (5) courbe.

2. Étiquette (1) selon la revendication 1,
**caractérisée en ce que**
l'étiquette (1) est apte à être fixée sur une surface cylindrique.

3. Étiquette (1) selon la revendication 1 ou 2,
**caractérisée en ce que**
l'arête (5) courbe est constituée comme segment d'une ellipse.

4. Étiquette (1) selon l'une des revendications 1 à 3,
**caractérisée en ce que**
la zone de renfort (3) est constituée comme partie de renfort rigide située dans le plan.

5. Étiquette (1) selon l'une des revendications 1 à 4,
**caractérisée en ce que**
la zone de renfort (3) de la deuxième section d'étiquette (1b) relevable est située dans le plan, ce par quoi la deuxième section d'étiquette (1b) forme une surface plane.

6. Étiquette (1) selon l'une des revendications 1 à 5,
**caractérisée en ce que**
la zone de renfort (3) est une partie en feuille fixée sur la deuxième section d'étiquette (1b).

7. Étiquette (1) selon l'une des revendications 1 à 6,
**caractérisée en ce que**
la rigidité de la zone de renfort (3) est augmentée localement.

8. Étiquette (1) selon l'une des revendications 1 à 7,
**caractérisée en ce que**
la rigidité de la zone de renfort (3) est augmentée localement par des substances chimiques.

9. Étiquette (1) selon la revendication 8,
**caractérisée en ce que**
les substances chimiques destinées à renforcer la rigidité sont appliquées par impression.

10. Étiquette (1) selon l'une des revendications 1 à 9,
**caractérisée en ce que**
la zone de renfort (3) est formée par une partie en feuille fixée de manière autocollante sur la deuxième section d'étiquette (1b).

11. Corps (6) comprenant
- une surface courbe et
- une étiquette (1) selon l'une des revendications 1 à 10, sachant que la première section d'étiquette (1a) de l'étiquette (1) est fixée sur la surface courbe du corps (6) et la deuxième section d'étiquette (1b) est relevée par rapport à la première section d'étiquette (1a) selon l'angle (α) défini spécifié et est arrêtée selon cet angle (α), sachant que l'arête (5) courbe repose contre la surface courbe du corps (6).

12. Corps (6) selon la revendication 11,
**caractérisé en ce que**
le corps (6) présente une forme cylindrique ou **en ce qu'**il est de forme tubulaire.

13. Corps (6) selon la revendication 11 ou 12,
**caractérisé en ce que**
le corps (6) est un corps de seringue.

14. Corps (6) selon l'une des revendications 11 à 13,
**caractérisé en ce que**
l'étiquette (1) est reliée à un dispositif de protection pour aiguilles.
